(19) Europäisches Patentamt

European Patent Office

Office européen des brevets

(11) Veröffentlichungsnummer: **0 294 579 B1**

(12) **EUROPÄISCHE PATENTSCHRIFT**

(45) Veröffentlichungstag der Patentschrift: **15.07.92**

(51) Int. Cl.⁵: **A47J 31/057**, A47J 31/00

(21) Anmeldenummer: **88106752.4**

(22) Anmeldetag: **27.04.88**

(54) **Kaffee- oder Teemaschine.**

(30) Priorität: **06.06.87 DE 8708082 U**

(43) Veröffentlichungstag der Anmeldung:
**14.12.88 Patentblatt 88/50**

(45) Bekanntmachung des Hinweises auf die
Patenterteilung:
**15.07.92 Patentblatt 92/29**

(84) Benannte Vertragsstaaten:
**AT BE CH DE ES FR GB IT LI NL SE**

(56) Entgegenhaltungen:
**EP-A- 0 224 041**
**DE-C- 3 402 869**
**DE-U- 7 811 283**
**US-A- 3 423 209**

(73) Patentinhaber: **Melitta Haushaltsprodukte
GmbH & Co. Kommanditgesellschaft
Ringstrasse 99
W-4950 Minden 1(DE)**

(72) Erfinder: **Heyn, Hans, Dieter
Kiekenbrink 7
W-4952 Porta Westfalica(DE)**
Erfinder: **Edler, Werner
Bergstrasse 17
W-4952 Porta Westfalica(DE)**

(74) Vertreter: **Loesenbeck, Karl-Otto, Dipl.-Ing. et
al
Jöllenbecker Strasse 164
W-4800 Bielefeld 1(DE)**

Rank Xerox (UK) Business Services

## Beschreibung

Die vorliegende Erfindung betrifft eine Kaffee- oder Teemaschine mit einem Durchlauferhitzer für das Brühwasser, einem Filtergefäß sowie einem mittels eines Saughebers entleerbaren und mit einer Restwasser-Entleerungsvorrichtung versehenen Sammelbehälter, von dem aus das Brühwasser in das Filtergefäß eingeleitet wird, wobei das Auslaufrohr des Saughebers eine an der tiefsten Stelle des Sammelbehälters angeordnete Öffnung durchtritt.

Eine Kaffee- oder Teemaschine der gattungsgemäßen Art ist aus der DE-U-78 11 283 bekannt.

Derartige Kaffee- oder Teemaschinen bieten ganz allgemein gesehen den Vorteil, daß zunächst Brühwasser im Sammelbehälter gesammelt und dieses Brühwasser dann in relativ kurzer Zeit in das Filtergefäß eingeleitet werden kann.

Durch diese Methode ergeben sich Vorteile bei der Herstellung von Aromaauszügen aus Kaffee oder Tee.

Wird der Sammelbehälter beispielsweise beim letzten Brühintervall nur teilweise mit Wasser gefällt, so daß der Saugheber nicht in Aktion treten kann, wird durch die Restwasser-Entleerungsvorrichtung erreicht, daß auch die beim letzten Brühintervall angefallene Brühwassermenge noch aus den Sammelbehälter auslaufen kann.

Bei der Konstruktion nach der DE-U-78 11 283 sind Saugheber einerseits und Restwasser-Entleerungsvorrichtung andererseits vollkommen voneinander getrennt, so daß der Boden des Sammelbehälters zwei Durchtrittsöffnungen benötigt.

Aus der DE-C-34 02 869 ist ein Vorratsbehälter einer Kaffeemaschine bekannt, der ebenfalls einen Saugheber aufweist, allerdings ist hier keine Restwassermengen-Entleerungsvorrichtung vorgesehen, da bei der dort beschriebenen Konstruktion die Entnahme des Kaffees gesteuert wird durch ein im Auslaufrohr des gesamten Vorratsbehälters angeordnetes Absperrorgan.

Der vorliegenden Erfindung liegt die Aufgabe zugrunde, eine Kaffee- oder Teemaschine der gattungsgemäßen Art so zu gestalten, daß zur Realisierung der Restwasser-Entleerungsvorrichtung eine erheblich einfachere Konstruktion möglich ist.

Diese Aufgabe wird erfindungsgemäß dadurch gelöst, daß der Durchmesser der Öffnung größer ist als der Außendurchmesser des Auslaufrohres, daß das Auslaufrohr außenseitig mit einer die Öffnung des Sammelbehälters verschließenden Dichtung versehen und zum Zwecke der Freigabe der Öffnung und damit zur Restwassermengenentleerung axial bewegbar gelagert ist.

Hierdurch wird erreicht, daß der Saugheber mit der Restwasser-Entleerungsvorrichtung in äußerst vorteilhafter Weise kombiniert ist, und zwar der Art, daß das Auslaufmit einer Dichtung versehen ist, welche im normalen Betriebszustand die vom Auslaufrohr durchtretene größere Öffnung des Sammelbehälters abdichtet, während zum Zwecke der Restwasser-Entleerung das Auslaufrohr axial verschoben und damit die vom Auslaufrohr durchtretene größere Öffnung des Sammelbehälters freigegeben wird.

Eine derartige Konstruktion ist einfach zu realisieren und benötigt außerdem nur eine einzige Durchtrennung des Bodens des Sammelbehälters. Außerdem läuft das Brühwasser immer an der gleichen Stelle in das Filtergefäß ein, was für den Brühprozeß ebenfalls vorteilhaft ist.

Weitere Merkmale der Erfindung sind Gegenstand von Unteransprüchen.

Ein Ausführungsbeispiel der Erfindung ist in der beigefügten Zeichnung dargestellt und wird im folgenden näher beschrieben.

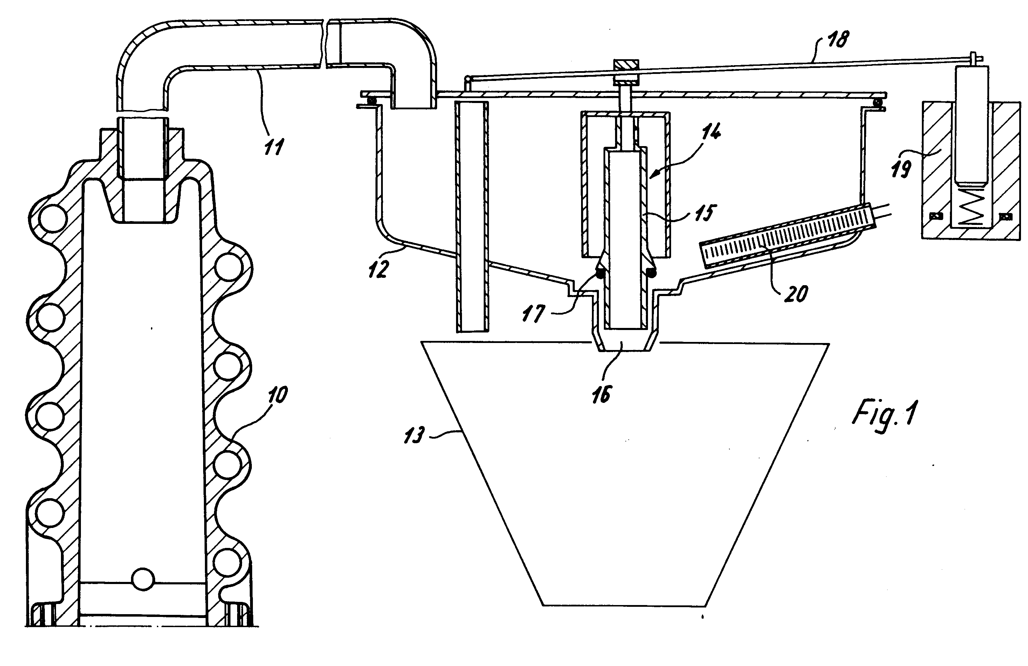

Die einzige Figur 1 zeigt eine schematische Darstellung der wesentlichsten Bestandteile einer erfindungsgemäßen Kaffee- oder Teemaschine.

In der Zeichnung ist mit dem Bezugszeichen 10 ein Durchlauferhitzer bezeichnet, in dem in einem nicht dargestellten Frischwasserbehälter bevorratetes Wasser erhitzt und über ein Überlaufrohr 11 in einen Sammelbehälter 12 gefördert wird.

Unterhalb des Sammelbehälters 12 ist ein Filtergefäß 13 angeordnet, welches üblicherweise auf einer nicht dargestellten Sammelkanne für das hergestellte Filtrat steht.

Der Sammelbehälter 12 ist in ansich bekannter Weise mit einem Saugheber 14 versehen, der eine Entleerung des Sammelbehälters 12 automatisch bewirkt, wenn eine bestimmte Füllhöhe des Sammelgefäßes 12 überschritten ist.

Der Saugheber 14 ist mit einem Auslaufrohr 15 versehen, welches den Sammelbehälter 12 im Bereich einer Öffnung 16 durchtritt, die an der tiefsten Stelle des Sammelbehälters 12 liegt.

Weiterhin ist das Auslaufrohr 15 außenseitig mit einer Dichtung 17 ausgestattet, die ein Verschließen der vorerwähnten Öffnung 16 ermöglicht.

Wie aus der Zeichnung weiterhin deutlich hervorgeht, ist das Auslaufrohr 15 achsial beweglich gelagert, und zwar über einen Schwenkhebel 18, der über einen Elektromagneten 19 betätigbar ist.

In der Fig. 1 ist das Auslaufrohr 15 in einer angehobenen Stellung dargestellt, d.h., in der gezeigten Stellung ist die Öffnung 16 des Sammelbehälters 12 freigegeben. Eventuell im Sammelbehälter 12 befindliche Restwassermengen könnten in dieser Stellung unmittelbar durch die Öffnung 16 in das Filtergefäß 13 auslaufen.

Wird hingegen das Auslaufrohr 15 des Saughebers 14 nach unten bewegt, so legt sich die Dichtung 17 auf den Randbereich der Öffnung 16 auf und dichtet diese Öffnung 16 nach außer ab.

In dieser Stellung kann dann nur Wasser aus dem Sammelbehälter 12 ausfließen, wenn der Saugheber 14 in Aktion tritt.

Vorteilhafterweise ist der Sammelbehälter 12 mit einer elektrischen Widerstandsheizung 20 versehen, um das im Sammelbehälter 12 bevorratete Wasser auf einer bestimmten Brühtemperatur halten zu können.

## Patentansprüche

1. Kaffee- oder Teemaschine mit einem Durchlauferhitzer für das Brühwasser, einem Filtergefäß (13) sowie einem mittels eines Saughebers (14) entleerbaren und mit einer Restwasser-Entleerungsvorrichtung versehenen Sammelbehälter (12), von dem aus das Brühwasser in das Filtergefäß (13) eingeleitet wird, wobei das Auslaufrohr (15) des Saughebers (14) eine an der tiefsten Stelle des Sammelbehälters (12) angeordnete Öffnung (16) durchtritt, **dadurch gekennzeichnet,** daß der Durchmesser der Öffnung (16) größer ist als der Außendurchmesser des Auslaufrohres (15), daß das Auslaufrohr (15) außenseitig mit einer die Öffnung (16) des Sammelbehälters (12) verschließenden Dichtung (17) versehen und zum Zwecke der Freigabe der Öffnung (16) und damit zur Restwassermengenentleerung achsial bewegbar gelagert ist.

2. Kaffee- oder Teemaschine nach Anspruch 1, dadurch gekennzeichnet, daß das Auslaufrohr (15) an der Oberseite des Sammelbehälters (12) an einem elektromagnetisch betätigbaren Schwenkhebel (18) angeschlossen ist.

3. Kaffee- oder Teemaschine nach Anspruch 1 oder 2, dadurch gekennzeichnet, daß der Sammelbehälter (12) mit einer elektrischen Widerstandsheizung (20) ausgestattet ist.

## Claims

1. Coffee or tea machine with a throughflow heater for the brewing water, a filter vessel (13) as well as a collecting container (12), which is emptiable by means of a siphon (14), is provided with an emptying device for residual water and from out of which the brewing water is conducted into the filter vessel (13), wherein the outlet pipe (15) of the siphon (14) passes through an opening (16) arranged at the deepest part of the collecting container (12), characterised thereby that the diameter of the opening (16) is larger than that of the outer diameter of the outlet pipe (15), and that the outlet pipe (15) is provided at its outer side with a seal (17) closing the opening (16) of the collecting container (12) and is mounted to be axially movable for the purpose of freeing the opening (16) and thus for emptying out the residual water quantities.

2. Coffee or tea machine according to claim 1, characterised thereby that the outlet pipe (15) is connected at the upper side of the collecting container (12) to an electromagnetically actuable pivot lever (18).

3. Coffee or tea machine according to claim 1 or 2, characterised thereby that the collecting container (12) is equipped with an electrical resistance heater (20).

## Revendications

1. Machine à café ou à thé comportant un dispositif de chauffage par passage pour l'eau d'infusion, un récipient de filtre (13) ainsi qu'un réservoir collecteur (12) destiné à être vidé par un dispositif de relevage par aspiration (14) et comportant un dispositif d'évacuation de l'eau résiduelle, réservoir collecteur d'où l'eau d'infusion est transférée dans le récipient de filtre (13), le tube de sortie (15) du dispositif de relevage par aspiration (14) traversant une ouverture (16) prévue au point le plus bas du réservoir collecteur (12), caractérisée en ce que le diamètre de l'ouverture (16) est supérieur au diamètre extérieur du tube de sortie (15) et ce dernier est muni extérieurement d'un joint (17) qui ferme l'ouverture (16) du réservoir collecteur (12) et qui est monté mobile axialement pour permettre de libérer l'ouverture (16) et d'évacuer ainsi les quantités d'eau résiduelle.

2. Machine à café ou à thé selon la revendication 1, caractérisée en ce que le tube de sortie (15) est relié du côté supérieur du réservoir collecteur (12) à un levier pivotant (18) actionné par un électro-aimant.

3. Machine à café ou à thé selon la revendication 1 ou 2, caractérisée en ce que le réservoir collecteur (12) est muni d'une résistance chauffante électrique (20).

Fig.1

EP 0 294 579 B1